(19) Europäisches Patentamt
European Patent Office
Office européen des brevets

(11) **EP 4 064 125 A1**

(12) **EUROPEAN PATENT APPLICATION**

(43) Date of publication:
**28.09.2022 Bulletin 2022/39**

(21) Application number: **21163953.9**

(22) Date of filing: **22.03.2021**

(51) International Patent Classification (IPC):
**G06K 9/62** *(2022.01)* **G06K 9/00** *(2022.01)*

(52) Cooperative Patent Classification (CPC):
**G06K 9/6274;** G06V 20/20; G06V 20/56

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventor: **The designation of the inventor has not yet been filed**

(54) **MULTI-DIMENSIONAL OBJECT POSE REGRESSION**

(57)    The invention relates to a method of training an artificial neural network ANN to be applied for multi-dimensional object pose regression. For training, the network ANN receives as an input data set a plurality of images IMA_i of one or more training objects OBJ_k in a training scene and a spatial ground truth data set comprising data describing spatial parameters of each one of the one or more objects OBJ k. The training of the network ANN is based on an iterative optimization procedure of a loss according to a given loss function $LF = \lambda_1 \cdot LF_{2D} + \lambda_2 \cdot LF_{dep} + \lambda_3 \cdot LF_{Rot}$, where $LF_{2D}$ is a 2D detection loss, $LF_{Rot}$ is a rotation regression loss, and $LF_{dep}$ is a 3D depth regression loss and where $\lambda_1, \lambda_2, \lambda_3$ are configurable weights. The iterative optimization procedure processes the input data set comprising the plurality of images IMA_i and the provided spatial ground truth data set of the objects OBJ_k to optimize the loss according to the loss function $LF$.

FIG 3

EP 4 064 125 A1

**Description**

The invention relates to the determination of a 6D pose of an object. More specifically, the invention relates to a training procedure for training an artificial neural network ANN for enabling the network ANN to estimate a multi-dimensional pose of at least one object of interest in a scene based on a single monocular image PICT of the scene.

Object detection and multi-dimensional pose estimation of the detected object are regularly addressed issues in computer vision since they are applicable in a wide range of applications in different domains. Just for example, autonomous driving, augmented reality, and robotics are hardly possible without fast and precise object localization in 2D and 3D.

In recent years, several computer vision tasks such as detection and segmentation have experienced a tremendous progress thanks to the development of deep learning. Successful 2D object detection alone is insufficient for real-world applications which require 6D object pose information such as in the context of augmented reality, robotic manipulation, autonomous driving etc. Therefore, the ability to recover the pose of the objects in 3D environments which is also known as the 6D pose estimation problem is essential for such applications.

The pose estimation often applies a pre-trained artificial neural network ANN (for the sake of brevity, an "artificial neural network ANN" will occasionally be named "network ANN" in the following) to estimate a pose of an object in a scene based on images of that object from different perspectives and based on a comprehensive data base, e.g. described in EP3511904B1 or WO2020/156836A1. Such approaches might apply 6D pose labels as supervision signals for training the network ANN, but it is cumbersome to provide a suitable data base with a sufficient amount of labeled training data in a comprehensive variety which allows the accurate detection of a wide range of objects for training. Also, it is hard and expensive to obtain accurate pose labels in real-world scenarios: Precise annotation of 6D poses of objects of interest in real data is intricate and time-consuming, however, an essential requirement to train pose estimation pipelines. Anyway, performance of detectors of networks ANN trained on such real data tend to deteriorate when the test images do not come from exactly the same domain as the images used for training.

As an alternative or in addition to real images for training, synthetically generated images have the advantage of a potentially unlimited amount of labeled data for training purposes. However, networks ANN trained using only synthetic data tend to perform worse than their counterparts trained on real-world data. Moreover, precise textured CAD models are required to render suitable synthetic data so that, as a consequence, the option of training artificial neural networks ANN based on synthetic data is not necessarily more promising than the real-world approach.

Thus, multi-dimensional pose estimation, in the best case covering six degrees of freedom (6DoF), from monocular RGB images still remains a challenging problem. Methods for coarse estimation of such poses are available, but the accuracy is often not sufficient for industrial applications.

Therefore, an approach and a suitable training method are required which serve the need to determine a multi-dimensional pose of an object of interest. This is solved by the training method suggested in claim 1 and by the apparatus suggested in claim 13. Dependent claims describe further advantageous embodiments.

A computer implemented method of training an artificial neural network ANN for enabling the network ANN to estimate a multi-dimensional pose of at least one object of interest in a scene based on a single monocular image PICT of the scene is proposed herewith. The network ANN receives as an input data set a plurality of images IMA_i of one or more known training objects OBJ_k in a training scene with i=1,...,I and I≥2 and with k=1,...,K and K≥1, i.e. the images IMA_i are visual representations of one or more training objects OBJ_k in the training scene. Different images IMA_i1, IMA_i2 with i1≠i2 represent different known views and perspectives PER_i, respectively, on the training scene and on the one or more objects OBJ_k, respectively. The attribute "known" w.r.t. the "perspective" means that, for example, the positions of the cameras CAM i capturing such images IMA_i from different perspectives PER_i are known. This includes the scenario in which the objects OBJ_k and images IMA_i, respectively, are based on synthetic data. In that scenario, the cameras are of course only virtual and the same is applicable for the positions POS_i and perspectives PER_i. Nevertheless, such in that case virtual or synthetic perspectives PER_i can be assumed to be available and known. The input data set moreover includes a spatial ground truth data set comprising data describing spatial parameters of each one of the one or more objects OBJ_k, wherein the spatial ground truth data include dimensional extensions of the objects OBJ_k, i.e. the concrete heights, widths, depths of the objects OBJ_k or the heights and widths of 2D bounding boxes of the objects OBJ_k for the different known views PER_i. Additionally, the spatial ground truth data include the 6D poses P_k of the objects OBJ_k, wherein the 6D poses can be composed of translational and rotational information. Therein, the training of the network ANN is based on an iterative optimization procedure of a loss according to a given loss function $LF = \lambda_1 \cdot LF_{2D} + \lambda_2 \cdot LF_{dep} + \lambda_3 \cdot LF_{Rot}$ where $LF_{2D}$ is a 2D detection loss, $LF_{Rot}$ is a rotation regression loss, and $LF_{dep}$ is a translation or 3D depth regression loss and where $\lambda_1, \lambda_2, \lambda_3$ are configurable weights. The iterative optimization procedure processes the input data set comprising the plurality of images IMA_i and the provided spatial ground truth data set of the objects OBJ_k to optimize the loss according to the loss function $LF$.

The spatial ground truth data set is composed of a known 2D bounding box $BB2D_k^{i,gt}$ for each object OBJ_k in each image IMA_i, and/or at least a known width $W_i^{k,\overline{g}t}$, a known height $H_i^{k,gt}$, and a known center point $PC_i^{k,gt}$ of each such 2D bounding box $BB2D_k^i$. Moreover, the spatial ground truth data set contains a known 6D pose P_k of each one of the one or more objects OBJ_k, known dimensions height, width, depth of each object OBJ_k, and known perspectives PER_i representing camera positions POS_i from which the images IMA_i have been captured. Again, this includes the scenario in which the objects OBJ_k and images IMA_i, respectively, are based on synthetic data. In that scenario, the cameras are of course only virtual and the same is applicable for the positions POS_i and perspectives PER_i.

The network ANN comprises a detector module which comprises a multi-branch 2D detector which is configured to process the input data set to estimate a 2D bounding box $BB2D_i^k$ for each object OBJ_k in each image IMA_i and/or at least a width $W_i^k$, a height $H_i^k$, and a center point $PC_i^k$ of each such 2D bounding box $BB2D_i^k$. The detector module moreover comprises a multi-branch 3D detector which is configured to process the input data set to estimate object center depths $d_i^k$ for each object OBJ_k in each image IMA_i, a 2D projection offset $\Delta_i^k$ for each object OBJ_k in each image IMA_i, an initial rotation estimation $R_{ini}$ and, more specifically, coefficients $w_c$ to determine $R_{ini}$, and a 6D-Rot branch 123 to regress the 6D values for angle calculation.

The 2D detection loss $LF_{2D}$ is defined as

$$LF_{2D}\left(PC_i^k, WH_i^k\right) = \lambda_{2D1} \cdot LF_{heatmap}\left(PC_i^k, PC_i^{k,gt}\right) + \lambda_{2D2} \cdot LF_{shape}\left(WH_i^k, WH_i^{k,gt}\right).$$

Therein, $WH_i^k$ stands for $W_i^k$ and $H_i^k$ and $WH_i^{k,gt}$ stands for the corresponding ground truth data. $LF_{heatmap}$ is a pixel-wise loss between estimated object center-point $PC_i^k$ and its ground truth value $PC_i^{k,gt}$. $LF_{shape}$ represents a distance between estimated heights and widths $WH_i^k$ and ground truth heights and widths $WH_i^{k,gt}$. $\lambda_{2D1}$, $\lambda_{2D2}$ are weighting factors, e.g. $\lambda_{2D1} = \lambda_{2D2} = 1$.

The translation or 3D depth regression loss $LF_{dep}$ is defined as

$$LF_{dep} = \sum_{ij \in L^2} LF_{dep}^{ij}$$

with

$$LF_{dep}^{ij} = \sum_{\substack{0 \le t < K \\ 0 \le k < K}} \frac{A_{tk}^{ij}\left\| \mathcal{K}_j\left(PER\_i,j \; \mathcal{K}_i^{-1}\left(PC_i^t + \Delta_i^t, d_i^t\right)\right) - \left(PC_j^k + \Delta_j^k\right)\right\|_2}{\left\|A^{ij}\right\|_F^2}.$$

Therein, K the number of objects OBJ_k, $A^{ij} \in \{0,1\}^{K \times K}$ is an adjacency matrix, wherein $A_{tk}^{ij}$ indicates whether object OBJ_t in image IMA_i and object OBJ_k in image IMA_j are matching, PER_i,j is a relative perspective, describing perspective PER_j relative to perspective PER_i, and $\mathcal{K}_j$ is a projection function to project a 3D point onto a 2D image

plane and $\mathcal{K}^{-1}$ defines the corresponding back-projection.

The rotation regression loss $LF_{Rot}$ is defined as

$$LF_{Rot} = \sum_{ij\epsilon L^2} LF_{Rot}^{ij}$$

with

$$LF_{Rot}^{ij} = \sum_{r\epsilon S} \sum_{\substack{0\leq t<K \\ 0\leq k<K}} \frac{A_{tk}^{ij} \; FUNCT\left(\mathcal{K}_j\left(PER\_i,j \; \mathcal{B}(T_i^t, R_i^t)\right), BB2D_j^k, r\right)}{\|A^{ij}\|_F^2 \, |S|}$$

Therein, K the number of objects OBJ_k and $A^{ij} \in \{0,1\}^{K\times K}$ is an adjacency matrix, wherein $A_{tk}^{ij}$ indicates whether object OBJ_t in image IMA_i and object OBJ_k in image IMA_j are matching. FUNCT(A,B,r) is a function for supervising the loss according to $LF_{Rot}^{ij}$ which compares parameters A and B while rotating any one of the parameters A, B by an angle r, $\mathcal{K}_j$ is a projection function to project a 3D point onto a 2D image plane and $\mathcal{K}^{-1}$ defines the corresponding back-projection. PER_i,j is a relative perspective, describing perspective PER_j relative to perspective PER_i.

$$\mathcal{B}(T_i^t, R_i^t)$$

is a function which generates for an object OBJ_t the points of a corresponding 3D bounding box BB3D from an estimated translation vector $T_i^t$ and an associated estimated rotation matrix Rf with known object OBJ_t dimensions in 3D. r is an angle to be applied by the RIoU function and $S$ represents the applied angles set of r.

Preferably, the function FUNCT applies a rotated Intersection-over-Union approach RIoU. The approach is based on a rotated IoU function RIoU(A,B,r) which rotates a parameter A, e.g. a re-projected bounding box $BB2D_j^{k,proj}$, and a parameter B, e.g. its corresponding ground truth 2D bounding box $BB2D_j^k$, by an angle r with respect to their 2D centers in an image. Since the standard IoU only brings limited geometry constraint to 3D bounding box rotation, the rotated IoU approach is applied to improve on in-plane rotations.

The translation vector $T_i^t$ is derived from the center point $PC_i^t$ estimated by the 2D detector (110) and the 2D projection offset $\Delta_i^t$ estimated by the 3D detector (120) so that projection related distortions are considered.

The rotation matrix $R_i^t$ is a combination $R_i^t = R_i^{t,ini} R_i^{t,angle}$ of a coarse pose classification $R_i^{t,ini}$ based on coefficients $w_c$, $c \in \{1, ...,6\}$ estimated by the rotation branch (122) of the 3D detector (120) and a fine residual rotation regression $R_i^{t,angle}$ estimated by the 6D-Rot branch (123) of the 3D detector (120). The coarse pose classification $R_i^{t,ini}$ can be calculated as a linear combination of basic 3D anchor bounding box basis elements $BB_c^{anch}$ of different orientation with c=1,...,6, utilizing the estimated coefficients $w_c$, wherein

$$BB_{ini} = \sum_{c=1}^{6} w_c \, BB_c^{H,anch}$$

and wherein $R_i^{t,ini}$ is then obtained by computing the rotation of $BB_{ini}$ in respect to a canonical object orientation.

Utilizing such trained network ANN, a computer implemented direct pose regression method PRM can estimate a multi-dimensional pose P_k of at least one object of interest OBJ_k in a scene wherein a single monocular image PICT of the scene is provided to the pre-trained artificial neural network ANN, i.e. the network ANN has been trained in a training phase preceding the regular application of the network ANN for estimating the object pose. The network ANN provides a pose P_k for each object of interest OBJ_k.

As a summary, a way for scalable, end-to-end light-weight 6D object pose regression with weak supervision is proposed. The approach requires neither 3D models of the objects of interest nor 6D object pose labels as ground truth for training of the applied artificial neutral network. Instead, during training 2D bounding boxes BB2D and object sizes H, W are used as the only labels and the problem is constrained with multiple images of known relative poses. The method can be trained online from synthetic data and it can be easily applied to real-world problems because of the simple inference pipeline.

A novel rotated IoU loss function, RIoU, is introduced to guide the 3D bounding boxes prediction and direct 6D pose regression. RIoU brings together a pose prediction from an image IMA_i with labeled 2D bounding boxes $BB2D_j^k$ of the corresponding object OBJ_k in other views IMA_j. We further propose a novel rotation representation according to the loss function which combines a coarse pose classification and a fine rotation regression. The rotation estimation combines an initial coarse pose classification with an offset regression using a continuous rotation parametrization that allows for direct pose estimation.

At test time, the method uses only a single image of the object to predict its 6D pose. It has been observed that the multi-view constraints used in training lead to better learning of a 6D pose embedding in comparison to fully supervised methods. Thus, the direct pose regression without the need for a consecutive refinement stage thereby ensures real-time performance.

In further, more detailed summary it can be argued that by using 2D object bounding boxes in multiple images as well as relative camera poses between camera views as additional soft constraints, one can learn better 6D pose embedding than when using fully annotated images with 6D pose labels. The training can be performed with completely synthetic images, but in practice it is also possible to obtain relative poses between camera images by means of approaches like visual "Simultaneous Localization and Mapping" ("SLaM") and "Structure from Motion" (SfM) or simply using a markerboard or robotic arm when acquiring training images. Multi-view geometry constraints help solving the scale uncertainty problem present in monocular RGB 6D pose estimation methods. This latent geometry information contained in multiple views is the indirect but useful data to guide direct 6D object pose regression.

The proposed multi-view object pose estimation method MVOPE can be applied, for example, in robotic manipulation, augmented reality, visual servoing, etc. to help machines or intelligent agencies better understand the 3D environment. For example and especially due to the simple inference pipeline and achievable real-time performance and accurate detection results, it can also be applied to drones to help them to avoid obstacles or have a better object tracking performance. It also can be applied to self-driving vehicles which can improve their object detection efficiency to avoid a crash. The 3D object pose estimation is one of the core abilities to support the machine operating in the real world. It is the bridge for these applications from the 2D images to the 3D world. By accurately localizing the objects in 3D and estimating their 3D poses, it can improve the action taken efficiency and the task success rate. As a weakly-supervised method, method MVOPE can be deployed to the real-world cases more easily for that we train our models in the easily obtained 2D and relative pose labels.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:

FIG 1    shows a real world scene with several objects of interest,

FIG 2    shows a direct pose regression method PRM for estimating a multi-dimensional pose P of the one or more objects in a scene,

FIG 3    shows a high level process of training an artificial neural network ANN,

FIG 4    shows a visualization of the rotation representation process applied for the rotation regression loss calculation.

DETAILED DESCRIPTION

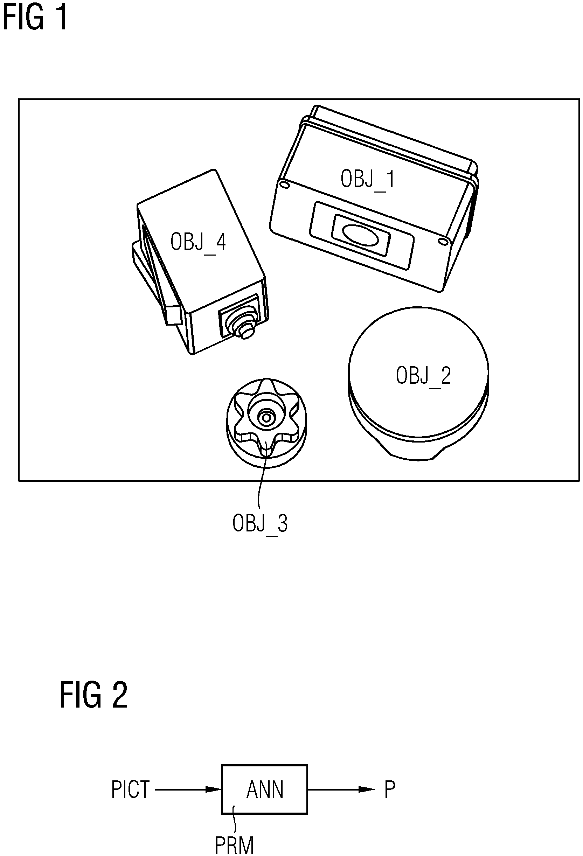

FIG 1 shows an exemplary real world scene with four objects of interest OBJ_1, OBJ_2, OBJ_3, OBJ_4. The poses P_k of those objects OBJ_k are to be determined.

The pose estimation method PRM provides the estimation of a multi-dimensional pose P based on a single input image PICT. This is shown in FIG 2. The method PRM can be formulated as a function $F(PICT) \rightarrow P \in SE(3)$ where PICT represents the image depicting the object of interest OBJ for which the multi-dimensional pose P has to be estimated. For example, the image shown in FIG 1 would qualify as input image PICT to determine the poses of the objects OBJ r with r=1,...,4 shown in that image PICT. The estimation of the corresponding object poses P_r of those objects OBJ_r is performed by a pre-trained artificial neural network ANN which is defined by network parameters $\theta$.

The network ANN training approach introduced herewith applies a weakly supervised object pose estimation method WSOPE. In general, when an artificial neural network is trained in a supervised manner, ground truth data GT are provided for the parameters the network predicts and the predictions are compared with the ground truth data. The resulting difference between prediction and ground truth data is the distance between them and a loss function *LF* is defined and applied to be optimized iteratively in the corresponding training of the network. In every iteration, network parameters $\theta$ are varied so that, in the end, the loss function *LF* is minimized. Therein, a suitable definition of the loss function *LF* is crucial for the applicability and reliability of the output of the network ANN during normal operation and utilization for analyzing a real world scene.

In the training to be described below, multiple images IMA_i for which spatial ground truth data are known are passed through the network ANN to train the network ANN and find optimized parameters $\theta$. As will be shown below, the spatial ground truth data comprise 2D bounding boxes BB2D and a known 6D pose of each object of interest OBJ_k, wherein such 6D pose consists of rotation and translation information of the object OBJ_k in respect to the camera CAM i which has captured the object OBJ_k. Additionally, relative positions of the cameras CAM i are known as well as the objects' OBJ k 3D dimensions from which 3D bounding boxes BB3D can be calculated later on.

In this training setup, the otherwise common utilization of expensive 6D pose labels needed in monocular pose estimation for training of an artificial neural network for estimating 6D poses is replaced by relative camera poses PER and 2D bounding boxes BB2D of objects OBJ of known dimensions width W, height H, depth D in multiple views. The multiple views are represented by the multiple images IMA_i with i=1,...,I and I≥2 from different perspectives PER_i. The introduction of multiple-view information in terms of relative camera poses PER_i during training allows for significantly better learning of 6D pose embeddings than training using supervised monocular 6D object poses only. It has been observed that such multi-view geometry constraints indeed help solving the scale uncertainty problem present in monocular 6D pose estimation methods. Such latent geometry information contained in multiple views is the indirect but useful data to guide direct 6D object pose regression. However, it is noted that multipleviews are only used during training as described below. At inference time, the single monocular image PICT is used as input.

Thus, in the proposed method WSOPE labels required for training are derived in terms of the 2D rotated bounding boxes BB2D of the objects of interest, camera intrinsic matrices PARA_i and absolute or relative camera poses PER_i or PER_i,j as well as known 3D object dimensions height, width, depth of each object OBJ_k. Correspondingly, the training function of the training of the network ANN, which will be described in more detail below, can be written as $\arg_{\theta}\min(LF(F^{\theta}(\textbf{IMA, PARA, PER, BB2D})))$. Thus, the training aims at an optimization of the network parameters $\theta$ and, correspondingly, of the given loss function *LF* as introduced below such that the given loss function *LF* provides minimum values.

To solve the problem of 6D pose regression the loss function *LF* is defined as a multi-task loss $LF = \lambda_1 \cdot LF_{2D} + \lambda_2 \cdot LF_{dep} + \lambda_3 \cdot LF_{Rot}$ where $LF_{2D}$ is a 2D detection loss, $LF_{Rot}$ is a rotation regression loss, and $LF_{dep}$ is a 3D depth regression loss, from which translation is computable. Parameters $\lambda_1, \lambda_2, \lambda_3$ are configurable weights which can be, for example, $\lambda_1 = \lambda_2 = \lambda_3 = 1$.

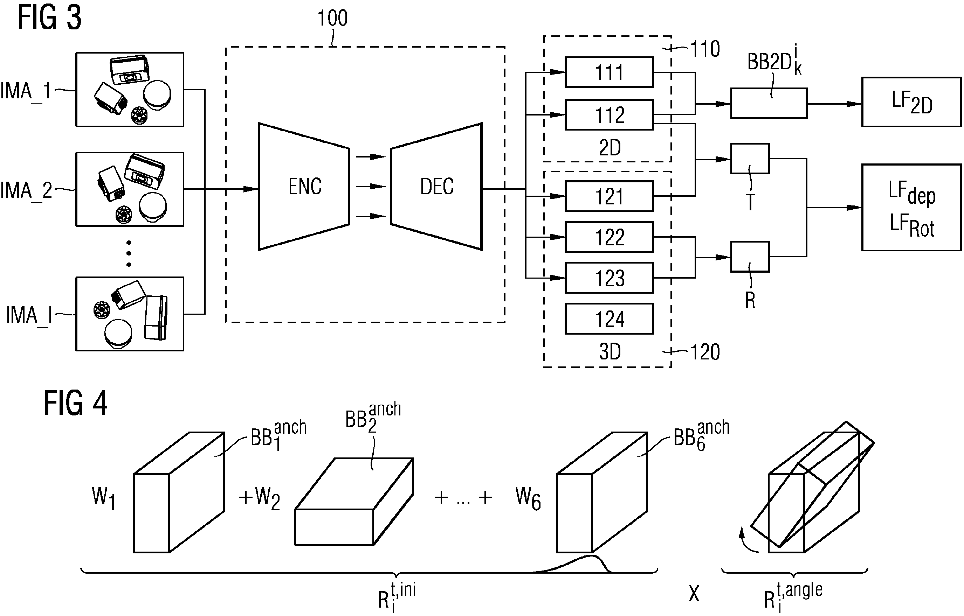

FIG 3 shows an overview of the training approach and of the whole training pipeline, respectively, for training the artificial neural network ANN in detail. The detector 100 extracts features from the entire image and then passes them to multi-branch detection heads 110, 120 to output the 2D bounding boxes BB2D and a 6D pose. For example, CenterNet [46], which constitutes a single shot end-to-end detection network, can be employed as a backbone of the detector 100 of the network ANN. Multi-branch heads follow the encoder-decoder feature extractor ENC-DEC of the detector 100.

The detector 100 receives as an input a plurality of training images IMA_i with i=1,...,I and I≥2 of a scene with objects OBJ_k of known 3D dimensions including width, height, depth with k=1,...,K and K≥1. Therein, different images IMA_i, IMA_j with i≠j represent different camera poses PER_i, PER_j and perspectives, respectively, relative to a fixed coordinate system of the scene. I.e. all the images IMA_i show the scene and the objects OBJ_k located in the scene, but each image IMA_i is a representation of the scene from a different perspective PER_i. For training, the camera poses and perspectives PER_i are known, either as absolute poses, i.e. PER_i, or preferably relative to each other, i.e. PER_i,j representing the camera pose PER_j of camera CAM_j relative to the pose PER_i of camera CAM_i. For example, PER_1 can be assumed to be a known reference perspective and other perspectives PER_1,j are expressed as perspectives relative to PER 1. In that case, the 6D poses of objects OBJ_k, as well as the corresponding 3D bounding boxes $BB3D_1^k$ introduced later, are known for the objects OBJ_k in the corresponding image IMA_1. Consequently, those 3D bounding boxes $BB3D_1^k$ can be easily projected to the other images IMA_j to determine $BB3D_j^k$ .

In practice, such relative camera poses PER_i,j can be obtained by means of visual simultaneous localization and mapping (SLaM) and structure from motion (SfM) methods, or simply by using a marker-board or robotic arm when acquiring training images. In case of synthetic images and data, respectively, for training such virtual camera poses PER_i are of course directly available from the process of generating the synthetic images IMA_i.

The 2D detection by the multi-branch 2D detector 110 of the detector 100 results in estimations of center points $PC_i^k$ as well as widths $W_i^k$ and heights $H_i^k$ of 2D bounding boxes $BB2D_i^k$ of each object OBJ_k in each image IMA_i. A WH branch 111 provides the widths $W_i^k$ and heights $H_i^k$ and a HM branch 112 of the 2D detector 110 provides the center points $PC_i^k$. The center points $PC_i^k$ correspond to peaks in heatmaps HM i corresponding to the images IMA_i. Based on this 2D output, the 2D detection loss is defined as follows:

$$LF_{2D}\big(PC_i^k, WH_i^k\big) = \lambda_{2D1} \cdot LF_{heatmap}\big(PC_i^k, PC_i^{k,gt}\big) + \lambda_{2D2} \cdot LF_{shape}\big(WH_i^k, WH_i^{k,gt}\big)$$

Therein, $WH_i^k$ stands for $W_i^k$ and $H_i^k$ and $PC_i^{k,gt}$ and $WH_i^{k,gt}$ represent the respective ground truth values. $LF_{heatmap}$ is the pixel-wise loss between estimated object center-point **PC** and its ground-truth value $PC^{gt}$ determined from the heatmaps. $LF_{shape}$ represents the distance between estimated $WH_i^k$ and ground truth heights and widths $WH_i^{k,gt}$ in object center points, and $\lambda_{2D1}$, $\lambda_{2D2}$ are the respective weights, e.g. $\lambda_{2D1} = \lambda_{2D2}$ **= 1.** The ground truth values $PC_i^{k,gt}$ and $WH_i^{k,gt}$ are actually known for the original images IMA_i.

Regarding the 6D object pose regression, the pose P_k of an object OBJ_k is parameterized as a translation vector $T^k \in \mathbb{R}^3$ and a rotation matrix **$R^k \in$ SO(3),** i.e. P_k={$T^k$, $R^k$}. Herein, the 3D object detection problem is treated as the 6D pose regression problem, which estimates the 3D translation $T^k$ and rotation $R^k$ of the object OBJ_k of a known size. In the training pipeline, the loss functions for translation and rotation predictions are defined separately.

The multi-branch 3D detector 120 of the detector 100 comprises a depth branch 121 to provide object depths **d,** a rotation branch 122 to provide an initial rotation estimation $R_i^{t,ini}$ and, more specifically, coefficients $w_c$ to determine $R_i^{t,ini}$, a 6D-Rot branch 123 to regress the 6D values for angle calculation to estimate a fine residual rotation regression $R_i^{t,angle}$, and an offset branch 124 to provide a 2D offset Δ. The outputs of the branches 121-124 will be utilized for optimization of the loss function **LF** and its contributions **LF_{Rot}** and **LF_{dep}** as described in the following.

With respect to the 3D depth regression loss **LF_{dep}**, the translation $T_i^k$ prediction assumes under perspective projection that a 2D point in an image IMA_i plane can be back-projected to 3D space with the known camera intrinsics PARA_i and the distance of the object OBJ_k to the respective camera CAM_i, i.e. the object center depth. A 2D projection offset $\Delta_i^k = \left[\delta x_i^k, \delta y_i^k\right]$ can be added to the respective 2D bounding box center $PC_i^k$ obtained by the 2D detector 110 for object OBJ_k in image IMA_i, considering that the 2D object center is slightly distorted in respect to the projection of its center from 3D. Thus, branch heads 121, 124 output object center depth $d_i^k$ and 2D offset $\Delta_i^k$. They are then used to recover the object pose in the 3D space.

A projection function $\mathcal{K}$ can project a 3D point onto a 2D image plane, and $\mathcal{K}^{-1}$ defines the back-projection of a 2D point to 3D using its depth **d**. Thus, translation **T** can be calculated as

$$T = \mathcal{K}^{-1}(PC + \Delta, d).$$

To estimate depth $d_i^k$ and 2D offset $\Delta_i^k$ for object OBJ_k and image IMA_i, the depth estimation loss $LF_{dep}$ is utilized. In this case, the known relative camera poses PER_i,j as well as object correspondences of objects in different images are utilized. Given that K objects OBJ_k are in the scene, the object correspondences between image IMA_i and image IMA_j can be represented as an adjacency matrix **A^{ij}** ∈ **{0,1}^{K×K}** where $A_{tk}^{ij}$ indicates whether object OBJ_t in view IMA_i and object OBJ_k in view IMA_j are matched and K is still the number of objects OBJ_k for which the network ANN is trained. More specifically, the depth estimation loss $LF_{dep}^{ij}$ for a pair of views i and j can be formulated as follows :

$$LF_{dep}^{ij}(d, \Delta) = \sum_{\substack{0 \le t < K \\ 0 \le k < K}} \frac{A_{tk}^{ij} \left\| \mathcal{K}_j \left( \text{PER\_i,j} \ \mathcal{K}_i^{-1}(PC_i^t + \Delta_i^t, d_i^t) \right) - \left(PC_j^k + \Delta_j^k \right) \right\|_2}{\|A^{ij}\|_F^2}$$

Consequently, the final depth loss $LF_{dep}$ between all available image pairs is computed as follows:

$$LF_{dep}(d, \Delta) = \sum_{ij \epsilon L^2} LF_{dep}^{ij}(d, \Delta)$$

Therein, L² represents the number of combination pairs between L available views in both directions.

The rotation matrix $R_i^k \in SO(3)$ of object OBJ_k mentioned above is generated from the outputs of the rotation branch 122 and the 6D-Rot branch 123 of the 3D detector 120 of the detector 100. Many works represent 3D rotations using 3D or 4D representations such as quaternions, axis-angles, or Euler angles. As discussed in [47], the non-Euclidean nature of these spaces and the resulting discontinuity in an Euclidean embedding of the parametrization make these 3D or 4D representations not ideally suitable for pose regression. In contrast to such prior art, the method introduced herewith solves the rotation as a combination of initial pose classification and rotation matrix regression. To supervise direct pose regression without 6D pose labels, a 3D bounding box $BB3D_i^k$ is first computed in one view, e.g. corresponding to PER_i with i=1, and then transformed to another view corresponding to PER_j with j≠i, using the known relative camera poses PER_i,j introduced above. The 3D object bounding box $BB3D_i^k$ of an object OBJ_k in image IMA_i can be directly computed from the known size of the object OBJ_k and its known pose P_k. Therefore, a function $B(T^k, R^k)$ is applied which generates the eight points of a 3D bounding box BB3D from the estimated translation vector $T^k$ and the associated rotation matrix $R^k$ with known object OBJ_k dimensions in 3D. With relative camera poses PER_i,j at hand these 3D bounding box points can be transformed and projected onto another image IMA_j by

$$\mathcal{K}_j \left( \text{PER\_i,j} \; \mathcal{B}(T_i^k, R_i^k) \right),$$

resulting in a re-projected 2D bounding box $BB2D_j^{k,proj}$ with j≠i. The re-projected bounding box $BB2D_j^{k,proj}$ can then be compared in each iteration of the training procedure to the corresponding ground truth data $BB2D_j^k$.

Similar to the depth estimation loss $LF_{dep}$, object correspondences $A_{tk}^{ij}$ are also required in the rotation loss $LF_{Rot}$ to obtain the re-projected bounding box in the other views. Without 6D pose labels, the pose regression is supervised by introducing an "Intersection over Union" (IoU) based loss between a re-projected bounding box $BB2D_j^{k,proj}$ and its corresponding 2D bounding box $BB2D_j^k$. Since the standard IoU approach only brings limited geometry constraint to 3D bounding box rotation, the known IoU approach is reformulated: To improve on in-plane rotations, a rotated IoU function $RIoU(BB3D^t, BB2D^k, r)$ is defined which rotates the projected 3D bounding box $BB3D^t$ of the object OBJ_t and the ground truth 2D bounding box $BB2D^k$ of the object OBJ_k by the angle r with respect to their 2D centers in an image. If the target image is IMA_j and the source is IMA_i, the IoU between them can be calculated as

$$LF_{Rot}^{ij}(R) = \sum_{r \in S} \sum_{\substack{0 \le t < K \\ 0 \le k < K}} \frac{A_{tk}^{ij} \; RIoU \left( \mathcal{K}_j \left( \text{PER\_i,j} \; \mathcal{B}(T_i^t, R_i^t) \right), BB2D_j^k, r \right)}{\|A^{ij}\|_F^2 \; |S|}$$

Therein, S represents the applied angles set, $|S|$ is its cardinality. For example, the RIoU loss might be calculated for $r \in \{0, \pi/6, \pi/3\}$ and for all available image pairs such that the overall rotation regression loss $LF_{Rot}$ is calculated as follows:

$$LF_{Rot}(R) = \sum_{ij \in L^2} LF_{Rot}^{ij}(R)$$

The RIoU loss function shows a periodicity for object rotations with angles in multiples of n/2. The known singularities in case of Euler or quaternion rotation representation may thus cause ambiguous maxima in solution space. Rotation estimation for an object OBJ_k is therefore treated differently by representing it as a combination of a coarse pose classification $R_{ini}$ using a pose basis with six coefficients $w_c$, $c \in \{1,...,6\}$ and a fine residual rotation regression $R_{angle}$, which can be written as follows:

$$RR_i^t = R_i^{t,ini} R_i^{t,angle}$$

For coarse pose classification $R_i^{t,ini}$, the rotation is represented as a linear combination of six 3D anchor bounding box basis elements $BB_c^{anch}$ of different orientation with c=1,...,6, utilizing the coefficients $w_c$. This actually happens in branch 122 of the 3D detector 120. The initial object pose is estimated as a linear combination of those anchor box poses $BB_c^{anch}$. For coarse pose classification the coefficients $w_c$ are directly regressed as indicated by the block 121 in FIG 4. They are normalized by a softmax function to select the most possible coarse bounding box.

The initial rotation $R_i^{t,ini}$ can be computed from a linear combination of anchor bounding boxes with:

$$BB_{ini} = \sum_{c=1}^{6} w_c \, BB_c^{H,anch}$$

Therein, $BB_c^{H,anch}$ are bounding box hypotheses of the basis anchor boxes $BB_c^{anch}$. $R_i^{t,ini}$ is then obtained by computing the rotation of $BB_{ini}$ in respect to the canonical object orientation.

For fine rotation $R_i^{t,angle}$ regression, a continuous rotation representation can be used, e.g. as shown in Yi Zhou, Connelly Barnes, Jingwan Lu, Jimei Yang, and Hao Li; On the continuity of rotation representations in neural networks; Proceedings of the IEEE Conference on Computer Vision and Pattern Recognition, pages 5745-5753, 2019.. A 6 × H × W branch, indicated as block 123 in FIG 3, outputs a rotation as 6D vector for each object OBJ_i, which can be converted to a 3 × 3 rotation matrix $R_i^{t,angle}$. Ablation experiments show that the rotation representation method allows for a more accurate estimation compared to direct rotation estimation.

As a summary, a 6D object pose estimation pipeline is introduced herewith, which can be trained with 2D bounding box labels BB2D, object dimensions H, W and relative camera poses PER_i,j as weak supervision constraints. A multi-view based rotated IoU loss function is utilized to guide 3D bounding boxes prediction and direct 6D pose regression. Further, a rotation estimation procedure which combines a coarse rotation classification with a residual rotation regression is applied. At test time, only one single monocular image PICT is required and the direct prediction allows for real-time performance.

Unlike other approaches that are multi-stage, a single shot method is proposed to estimate the pose, but instead of pose refinement that other solutions employ, the method introduced herein allows direct pose regression. To achieve this, two core tasks are addressed: The first is related to rotation estimation by regression or, in other words, rotation parameterization allowing robust direct pose regression. The second concerns a way of imposing relative pose constraints. These constraints cannot be accurately computed only from known 2D bounding boxes in multiple views. Thus, rotation is estimated by finding the relationship between 2D and 3D and measuring the overlap error in terms of the introduced Intersection over Union (IoU) approach between re-projected 3D bounding boxes BB3D and their corresponding 2D bounding boxes BB2D in the available views IMA_j. The novel measure RIoU is introduced in order to handle in-plane rotations. Also, in contrast to other methods that train one artificial neural network per object OBJ_k, the network ANN described herein can be trained with multiple objects OBJ_k at once, eliminating the need for retraining with each new object.

Finally, the proposed method basically offers three contributions:

Firstly, a scalable, end-to-end direct 6D pose regression network trained possibly on synthetic data and particularly with weak pose labels such as 2D bounding boxes, object dimensions and relative camera poses in multiple views, resulting in learning better 6D pose embeddings and real-time pose estimation from a single image during inference, is provided.

Secondly, a multi-view rotated IoU (RIoU) loss to guide 6D pose estimation without pose labels is provided. To bridge the gap between 2D and 3D, the projected RIoU loss is computed from multiple views using relative camera poses PER_i and 3D bounding boxes BB3D.

Thirdly, a differentiable 3D rotation estimation procedure is provided which combines a rough initial anchor box orientation classification with an offset rotation regression using a continuous rotation parametrization to enable direct rotation regression. This object 3D rotation representation is the combination of a rough initial template-based pose classification and accurate rotation matrix regression to deal with the tough direct rotation regression problem.

**Claims**

1. A computer implemented method of training an artificial neural network ANN, wherein the network ANN receives as an input data set

   - a plurality of images IMA_i of one or more known training objects OBJ k in a training scene with 1=1,..., I and I≥2 and with k=1,...,K and K≥1, wherein different images IMA_i1, IMA_i2 with i1≠i2 represent different known and perspectives PER_i on the training scene,
   - a spatial ground truth data set comprising data describing spatial parameters of each one of the one or more objects OBJ_k,

   wherein

   - the training of the network ANN is based on an iterative optimization procedure of a loss according to a given loss function $LF = \lambda_1 \cdot LF_{2D} + \lambda_2 \cdot LF_{dep} + \lambda_3 \cdot LF_{Rot}$, where $LF_{2D}$ is a 2D detection loss, $LF_{Rot}$ is a rotation regression loss, and $LF_{dep}$ is a 3D depth regression loss and where $\lambda_1, \lambda_2, \lambda_3$ are configurable weights, and
   - the iterative optimization procedure processes the input data set comprising the plurality of images IMA_i and the provided spatial ground truth data set of the objects OBJ_k to optimize the loss according to the loss function $LF$.

2. Method according to claim 1, wherein the spatial ground truth data set is composed of

   - a known 2D bounding box $BB2D_k^{i,gt}$ for each object OBJ_k in each image IMA_i, and/or a known width $W_i^{k,gt}$, a known height $H_i^{k,gt}$, and a known center point $PC_i^{k,gt}$ of each such 2D bounding box $BB2D_k^i$,
   - known perspectives PER_i representing camera positions POS_i from which the images IMA i have been captured,
   - a known 6D pose P_k of each one of the one or more objects OBJ_k,
   - known dimensions height, width, depth of each object OBJ_k.

3. A method according to claim 2, wherein the network ANN comprises

   - a multi-branch 2D detector (110) which is configured to process the input data set to estimate a 2D bounding box $BB2D_i^k$ for each object OBJ_k in each image IMA_i and/or a width $W_i^k$, a height $H_i^k$, and a center point $PC_i^k$ of each such 2D bounding box $BB2D_i^k$,
   - a multi-branch 3D detector (120) which is configured to process the input data set to estimate

     -- object center depths $d_i^k$ for each object OBJ_k in each image IMA_i,
     -- a 2D projection offset $\Delta_i^k$ for each object OBJ_k in each image IMA_i,
     -- an initial rotation estimation $R_{ini}$ and, more specifically, coefficients $w_c$ to determine $R_{ini}$,
     -- a 6D-Rot branch 123 to regress the 6D values for angle calculation, and

4. Method according to claim 3, wherein the 2D detection loss $LF_{2D}$ is defined as

$$LF_{2D}\left(PC_i^k, WH_i^k\right) = \lambda_{2D1} \cdot LF_{heatmap}\left(PC_i^k, PC_i^{k,gt}\right) + \lambda_{2D2} \cdot LF_{shape}\left(WH_i^k, WH_i^{k,gt}\right)$$

   wherein

- $WH_i^k$ stands for $W_i^k$ and $H_i^k$ and $WH_i^{k,gt}$ stands for the corresponding ground truth data,

- $LF_{heatmap}$ is a pixel-wise loss between estimated object center-point $PC_i^k$ and its ground truth value $PC_i^{k,gt}$,

- $LF_{shape}$ represents a distance between estimated heights and widths $WH_i^k$ and ground truth heights and widths $WH_i^{k,gt}$,

- $\lambda_{2D1}$, $\lambda_{2D2}$ are weighting factors.

5. Method according to any one of claims 3 to 4, wherein the 3D depth regression loss $LF_{dep}$ is defined as

$$LF_{dep} = \sum_{ij \in L^2} LF_{dep}^{ij}$$

with

$$LF_{dep}^{ij} = \sum_{\substack{0 \leq t < K \\ 0 \leq k < K}} \frac{A_{tk}^{ij} \left\| \mathcal{K}_j \left( \text{PER\_i,j} \; \mathcal{K}_i^{-1}(PC_i^t + \Delta_i^t, d_i^t) \right) - \left( PC_j^k + \Delta_j^k \right) \right\|_2}{\|A^{ij}\|_F^2}$$

wherein

- K the number of objects OBJ_k,

- $A^{ij} \in \{0,1\}^{K \times K}$ is an adjacency matrix, wherein $A_{tk}^{ij}$ indicates whether object OBJ_t in image IMA_i and object OBJ_k in image IMA_j are matching,
- PER_i,j is a relative perspective, describing perspective PER_j relative to perspective PER_i,

- $\mathcal{K}_j$ is a projection function to project a 3D point onto a 2D image plane and $\mathcal{K}^{-1}$ defines the corresponding back-projection.

6. Method according to any one of claims 3 to 5, wherein the rotation regression loss $LF_{Rot}$ is defined as

$$LF_{Rot} = \sum_{ij \in L^2} LF_{Rot}^{ij}$$

with

$$LF_{Rot}^{ij} = \sum_{r \in S} \sum_{\substack{0 \leq t < K \\ 0 \leq k < K}} \frac{A_{tk}^{ij} \; FUNCT \left( \mathcal{K}_j \left( \text{PER\_i,j} \; \mathcal{B}(T_i^t, R_i^t) \right), BB2D_j^k, r \right)}{\|A^{ij}\|_F^2 \, |S|}$$

wherein

- K the number of objects OBJ_k,

- $A^{ij}$ E $\{0,1\}^{K \times K}$ is an adjacency matrix, wherein $A^{ij}_{tk}$ indicates whether object OBJ_t in image IMA_i and object OBJ_k in image IMA_j are matching,

- FUNCT(A,B,r) is a function for supervising the loss according to $LF^{ij}_{Rot}$ which compares parameters A and B while rotating any one of the parameters A, B by an angle r,

- $\mathcal{K}_j$ is a projection function to project a 3D point onto a 2D image plane and $\mathcal{K}^{-1}$ defines the corresponding back-projection,

- PER_i,j is a relative perspective, describing perspective PER_j relative to perspective PER_i,

-

$$\mathcal{B}(T^t_i, R^t_i)$$

is a function which generates for an object OBJ_t the points of a corresponding 3D bounding box BB3D from an estimated translation vector $T^t_i$ and an associated estimated rotation matrix Rf with known object OBJ_t dimensions in 3D,

- **r** is an angle to be applied by the RIoU function,

- **S** represents the applied angles set of **r**.

7.  Method according to claim 6, wherein the function FUNCT applies a rotated Intersection-over-Union approach RIoU.

8.  Method according to any one of claims 6 to 7, wherein the translation vector $T^t_i$ is derived from the center point $PC^t_i$ estimated by the 2D detector (110) and the 2D projection offset $\Delta^t_i$ estimated by the 3D detector (120).

9.  Method according to any one of claims 6 to 8, wherein the rotation matrix $R^t_i$ is a combination $R^t_i = R^{t,ini}_i R^{t,angle}_i$ of a coarse pose classification $R^{t,ini}_i$ based on coefficients $w_c$, $c \in \{1,...,6\}$ estimated by the rotation branch (122) of the 3D detector (120) and a fine residual rotation regression $R^{t,angle}_i$ estimated by the 6D-Rot branch (123) of the 3D detector (120).

10. Method according to claim 8, wherein the coarse pose classification $R^{t,ini}_i$ is calculated as a linear combination of basic 3D anchor bounding box basis elements $BB^{anch}_c$ of different orientation with c=1,...,6, utilizing the estimated coefficients $w_c$, wherein

$$BB_{ini} = \sum_{c=1}^{6} w_c \, BB^{H,anch}_c$$

and wherein $R^{t,ini}_i$ is then obtained by computing the rotation of **$BB_{ini}$** in respect to a canonical object orientation.

11. A computer implemented direct pose regression method PRM for estimating a multi-dimensional pose P_k of at least one object of interest OBJ_k in a scene wherein a single image PICT of the scene is provided to a pre-trained artificial neural network ANN and the network ANN provides a pose P_k for each object of interest OBJ_k, wherein the network ANN has been trained based on a method according to any one of claims 1 to 10.

FIG 1

FIG 2

FIG 3

FIG 4

EP 4 064 125 A1

| | Europäisches Patentamt European Patent Office Office européen des brevets | **EUROPEAN SEARCH REPORT** | Application Number EP 21 16 3953 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THALHAMMER STEFAN ET AL: "SyDPose: Object Detection and Pose Estimation in Cluttered Real-World Depth Images Trained using Only Synthetic Data", 2019 INTERNATIONAL CONFERENCE ON 3D VISION (3DV), IEEE, 16 September 2019 (2019-09-16), pages 106-115, XP033653356, DOI: 10.1109/3DV.2019.00021 [retrieved on 2019-10-28] | 1,11 | INV. G06K9/62 G06K9/00 |
| A | * the whole document * ----- | 2-10 | |
| Y | JUIL SOCK ET AL: "Multi-Task Deep Networks for Depth-Based 6D Object Pose and Joint Registration in Crowd Scenarios", ARXIV.ORG, CORNELL UNIVERSITY LIBRARY, 201 OLIN LIBRARY CORNELL UNIVERSITY ITHACA, NY 14853, 11 June 2018 (2018-06-11), XP080889248, | 1-4,11 | |
| A | * the whole document * ----- | 5-10 | TECHNICAL FIELDS SEARCHED (IPC) |
| Y | CIPOLLA ROBERTO ET AL: "Multi-task Learning Using Uncertainty to Weigh Losses for Scene Geometry and Semantics", 2018 IEEE/CVF CONFERENCE ON COMPUTER VISION AND PATTERN RECOGNITION, IEEE, 18 June 2018 (2018-06-18), pages 7482-7491, XP033473668, DOI: 10.1109/CVPR.2018.00781 [retrieved on 2018-12-14] | 1-4,11 | G06K G06N |
| A | * the whole document * ----- | 5-10 | |
| | -/-- | | |

The present search report has been drawn up for all claims

| Place of search | Date of completion of the search | Examiner |
|---|---|---|
| The Hague | 31 August 2021 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 16 3953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN DENGSHENG ET AL: "Learning Canonical Shape Space for Category-Level 6D Object Pose and Size Estimation", 2020 IEEE/CVF CONFERENCE ON COMPUTER VISION AND PATTERN RECOGNITION (CVPR), IEEE, 13 June 2020 (2020-06-13), pages 11970-11979, XP033804751, DOI: 10.1109/CVPR42600.2020.01199 [retrieved on 2020-08-03] * the whole document * | 1-11 | |
| A | LEI KE ET AL: "GSNet: Joint Vehicle Pose and Shape Reconstruction with Geometrical and Scene-aware Supervision", ARXIV.ORG, CORNELL UNIVERSITY LIBRARY, 201 OLIN LIBRARY CORNELL UNIVERSITY ITHACA, NY 14853, 26 July 2020 (2020-07-26), XP081727316, * the whole document * | 1-11 | |
| A | CANER SAHIN ET AL: "A Review on Object Pose Recovery: from 3D Bounding Box Detectors to Full 6D Pose Estimators", ARXIV.ORG, CORNELL UNIVERSITY LIBRARY, 201 OLIN LIBRARY CORNELL UNIVERSITY ITHACA, NY 14853, 28 January 2020 (2020-01-28), XP081587789, * the whole document * | 1-11 | TECHNICAL FIELDS SEARCHED (IPC) |

The present search report has been drawn up for all claims

| Place of search | Date of completion of the search | Examiner |
|---|---|---|
| The Hague | 31 August 2021 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3511904 B1

- WO 2020156836 A1

**Non-patent literature cited in the description**

- **YI ZHOU ; CONNELLY BARNES ; JINGWAN LU ; JIMEI YANG ; HAO LI.** On the continuity of rotation representations in neural networks. *Proceedings of the IEEE Conference on Computer Vision and Pattern Recognition,* 2019, 5745-5753